# EUROPEAN PATENT SPECIFICATION

(11) **EP 3 052 667 B1**
(45) Date of publication and mention of the grant of the patent: **05.12.2018**
(21) Application number: 14802700.6
(22) Date of filing: 02.10.2014
(51) Int. Cl.: C22B 3/08, C22B 3/10, C22B 3/00, C22B 15/00

(54) **METHOD FOR SEPARATING PRECIOUS METALS FROM MINERALS**
VERFAHREN ZUR TRENNUNG VON EDELMETALLEN AUS MINERALIEN
PROCÉDÉ POUR SÉPARER DES MÉTAUX PRÉCIEUX DE MINÉRAUX

(30) Priority: 02.10.2013 FI 20135984
(43) Date of publication of application: 10.08.2016
(73) Proprietor: Outotec (Finland) Oy, 02230 Espoo (FI)
(72) Inventor: KARONEN, Janne, FI-32800 Kokemäki (FI); MIETTINEN, Ville, FI-53850 Lappeenranta (FI); KOTIRANTA, Tuukka, 28200 Pori (FI); AHTIAINEN, Riina, FI-28610 Pori (FI)
(74) Representative: Seppo Laine Oy
(86) International application number: PCT/FI2014/050750
(87) International publication number: WO 2015/049421

(56) References cited:
- WO-A1-2006/087412
- WO-A1-2007/093666
- US-A- 5 869 012
- US-A1- 2005 188 791
- US-A1- 2007 022 843
- MIKE ADAMS ET AL: "Hydrometallurgical processing of Platreef flotation concentrate", MINERALS ENGINEERING, PERGAMON PRESS , OXFORD, GB, vol. 24, no. 6, 17 September 2010 (2010-09-17), pages 545-550, XP028383498, ISSN: 0892-6875, DOI: 10.1016/J.MINENG.2010.09.009 [retrieved on 2010-09-28]

## Description

### FIELD OF THE INVENTION

The invention relates to a method for separating precious metals, especially platinum group metals (PGM metals) and optionally gold (Au) and silver (Ag) from a starting material comprising the same. Furthermore, base metals can optionally be separated in the same method.

### BACKGROUND OF THE INVENTION

Publication WO 00/65111 discloses a method for recovering a precious metal from a host material comprising the steps of subjecting the host material to an oxidative pressure leach process, in the presence of a halide ion constituent, which is reactive with the precious metal and at an elevated temperature of at least 170°C to cause at least a portion of the precious metal to be extracted by a leach solution in the form of a precious metal-bearing chloride-complex and recovering the precious metal from the leach solution. When the host material is a smelt matte material including a base metal and a precious metal, said matte is subjected to a first oxidative pressure leach process to recover substantially all of said base metal in the form of at least one sulphate complex into a first leach solution, and then said matte material is subjected to a second oxidative pressure leach process in the presence of a halide ion constituent.

US 5,869,012 discloses a process for the extraction of zinc from a sulphide ore or concentrate containing copper and zinc including subjecting the concentrate to pressure oxidation in the presence of oxygen and an acidic halide solution to obtain a resulting pressure oxidation slurry and subjecting the slurry to a liquid/solid separation step to produce a liquor containing copper and zinc in solution.

WO 99/60178 discloses a hydrometallurgical treatment process for extracting platinum group metals from a flotation concentrate in which the invention resolves around obviating the matte smelting and granulating process. Instead the concentrate is submitted to pressure leaching, oxidative or reductive roasting and final recovery by means of ion exchange adsorption. Roasting is applied in order to convert the platinum group metals to a form that dissolves in chlorine/HCI and a chlorine/HCI leach that renders the platinum group metals in solution.

WO 2007/143807 discloses a recycling step in an oxidative pressure leaching process for recovery of metals using halide ions, in which a portion of the leached solids are recycled back to the feed to the autoclave, to allow two or more passes through the high temperature leaching step.

US Patent 5,328,669 discloses a method for extracting platinum group metals, gold and silver from complex ores, automobile scrap, refractory ores and as naturally occurring by leaching the precious metal containing materials with a solution containing halogen salts such as potassium or sodium iodide and bromide in the presence of ammonium ions and oxygen. The precious metal containing materials and reactants are charged into a reaction zone held at high temperatures and pressures to form a slurry containing a precious metal ion solution. The precious metal ion solution is separated from the slurry and subjected to recovering techniques to recover the precious metals.

Adams, M. et al. Hydrometallurgical processing of Platreef flotation concentrate, Minerals Engineering 2011, Vol. 24, p. 545 - 550, discloses hydrometallurgical process routes to extract platinum group metals and base metals from flotation concentrates. The process described in the article uses rather costly reagents in high concentrations, i.e. Cl₂ gas and HCI. The conditions described in the article are demanding in various respects, for example the acid concentration required is 220 g/l, which demands the removal of sulphur before leaching in order to keep the process economic.

WO 2007/093666 discloses a process for recovering gold from essentially copper-free leaching residue. A traditional hydrometallurgical method for recovering PGM metals from solid material is to leach it with Cl₂ gas and high HCI concentration. When using chlorine gas the oxidation potential of the solution is usually very high, over 800 mV. The disclosed gold recovery process uses oxidation potential of under 650 mV. The publication does not mention PGM metals.

It has been found that the methods described above are not as such applicable to efficient separation and recovery of precious metals from mineral-based starting materials. Consequently, there is a need for improved methods for separating precious metals from various mineral-based starting materials, such as mineral concentrates. Especially there is a need for improved methods in milder conditions and with cheaper reagents, which methods are also economic to apply.

### BRIEF DESCRIPTION OF THE INVENTION

An object of the present invention is to provide a method for separating and recovering precious metals from mineral-based starting materials. The objects of the invention are achieved by a method and an apparatus, which are characterized by what is stated in the independent claims. The preferred embodiments of the invention are disclosed in the dependent claims.

The invention is based on applying a two-step leaching process comprising a pressure oxidative leach and an atmospheric halide leach to the separation of precious metals. Optionally, base metals can be separated in the same process. In more detail, when combining the pressure oxidative leaching with the atmospheric halide leaching, PGM, gold and silver can be recovered with good yield with less process steps and cheaper reagents. For example, there is no more need for the traditional roasting step. Roasting has been typically used for removing sulphur, if sulphur is not removed it will dissolve in the subsequent leaching step when traditional PGM leaching conditions are used causing high consumption of expensive reagents.

### BRIEF DESCRIPTION OF THE DRAWINGS

In the following the invention will be described in greater detail by means of preferred embodiments with reference to the attached accompanying drawings, in which
Figure 1 is an exemplary flow diagram of an embodiment of the method of the invention.
Figure 2 is an exemplary flow diagram of another embodiment of the invention, comprising smelting and atmospheric acid leaching as preceding steps.

### DETAILED DESCRIPTION OF THE INVENTION

The invention relates to a method for separating precious metals from a starting material. In an embodiment of the invention, base metals can be separated in the same process. The method comprises the steps of
a) subjecting the starting material to pressure oxidative leaching forming a first solid residue containing precious metals and a first leach solution,
b) separating the first solid residue containing precious metals from the first leach solution by solid-liquid separation, and
c) subjecting the first solid residue containing precious metals to atmospheric halide leaching, wherein the precious metals are leached into solution forming a second leach solution containing precious metals and a second solid residue. In the method the atmospheric halide leaching is performed in an acidity of the solution between pH of less than 2.6 and HCI concentration of less than 100 g/l and in the following conditions:
   (i) the leaching liquor is an aqueous solution containing dissolved cupric ions (Cu2+), chloride (Cl-) and bromide (Br),
   (ii) pH is within a range where the cupric ion does not precipitate,
   (iii) the oxidation potential is at least 450 mV Pt vs. Ag/AgCl, typically at least 500 mV Pt vs. Ag/AgCl, more typically at least 550 mV Pt vs. Ag/AgCl.

According to an embodiment of the invention the step b) is performed directly after step a) and step c) is performed directly after step b). According to an embodiment of the invention performing the steps directly after each other means that no other process steps involving reactions effecting to the dissolution of the minerals are needed between steps a), b) and c). Typical example of such process step is for example roasting.

According to an embodiment of the invention the method consists of the above-mentioned steps a), b) and c).

In context with the present invention, the precious metals typically comprise platinum group metals (PGM metals). Gold (Au) and silver (Ag) may also be separated with the present method.

In an embodiment of the invention, the precious metals comprise PGM metals.

In context with the present invention, the PGM metals may comprise any PGM metals selected from platinum (Pt), palladium (Pd), rhodium (Rh), iridium (Ir), osmium (Os), rhutenium (Ru), especially one or more of Pt, Pd and Rh.

In context with the present invention, the base metals may comprise any base metals selected from copper (Cu), lead (Pb), nickel (Ni), zinc (Zn), iron (Fe) and cobalt (Co), especially Cu, Co and Ni.

### Starting material

The starting material for the method may be any mineral concentrate containing precious metals, typically PGM metals and Au and Ag, especially a mineral concentrate containing PGM metals. The starting material may also be selected from leach residues containing precious metals, typically PGM metals and Au and Ag, especially leach residues containing PGM metals.

Especially, the starting material may be selected from nickel-copper concentrates, PGM concentrates, copper concentrates and nickel concentrates. The starting material may also be selected from leach residues obtained from leaching of nickel-copper concentrates, PGM concentrates, copper concentrates and nickel concentrates.

In one embodiment of the invention, the starting material may be a product obtained from smelting of a nickel and/or copper bearing material. Said product may be a matte directly obtained from smelting of the nickel and/or copper bearing material, the smelting being performed in a flash furnace or an electric furnace. Said product may also be a matte subjected to further treatment, such as a leach product obtained from atmospheric acid leaching of said matte. The starting material for the process of the invention may be the leach product as such (without solid/liquid separation) or a leach residue obtained from the leaching (solid leach residue obtained from solid/liquid separation of the leach product).

The nickel and/or copper bearing material subjected to smelting above may be selected from any mineral concentrates containing nickel, copper, PGM metals, Au and Ag, especially mineral concentrates containing nickel, copper and PGM metals. Especially, the nickel and/or copper bearing material may be selected from nickel-copper concentrates, PGM concentrates, copper concentrates and nickel concentrates.

The smelting of the nickel and/or copper bearing material is typically performed in a flash furnace to obtain a matte and a slag. The matte is subjected to grinding, whereafter it is introduced into atmospheric acid leaching. The slag may be subjected to cleaning in an electric furnace, producing a cleaned matte and a further slag. The cleaned matte is also subjected to grinding and then to atmospheric acid leaching. A typical acid used in the acid leaching is sulphuric acid.

### Method

In the first leaching step a), the starting material is subjected to pressure oxidative leaching forming a first solid residue containing precious metals and a first leach solution. The pressure oxidative leaching is typically performed in the presence of an acid concentration of up to 100 g/l. The acid may be selected from sulphuric acid, for example.

The pressure oxidative leaching is typically performed at a temperature of 120 - 240°C, preferably 200 - 220°C for the mineral concentrates defined above and 140 - 190°C for the products obtained from smelting of a nickel and/or copper bearing material.

The pressure applied in pressure oxidative leaching is as a rule in the range of 8 - 30 bar, preferably 24 - 28 bar for the mineral concentrates and 11-18 bar for the products obtained from smelting of a nickel and/or copper bearing material. The leaching is typically performed in an autoclave.

Furthermore, the pressure oxidative leaching requires an oxidation source, which may be selected from oxygen, oxygen-enriched air, air or hydrogen peroxide. The partial overpressure of oxygen may be in the range of 4 to 8 bar, for example approximately 6 bar.

The pressure oxidative leaching may be followed by a hot cure phase, wherein the temperature is decreased to a range of 85 to 95°C, preferably approximately 90°C.

In the pressure oxidative leaching step a), base metals (such as copper, cobalt and nickel) are leached into solution forming a first leach solution. Precious metals (such as platinum, palladium and rhodium as well as gold and silver) remain in the leach residue forming a first solid residue containing precious metals.

After the pressure oxidative leaching step a), the method comprises a solid-liquid separation step b), where the first solid residue containing precious metals is separated from the first leach solution.

The second leaching step c) of the method of the invention comprises atmospheric halide leaching of the first solid residue containing precious metals, obtained in step a). The atmospheric halide leaching step c) is typically performed in the following conditions:
(i) the leaching liquor is an aqueous solution containing dissolved cupric ions (Cu²⁺), chloride (Cl⁻) and bromide (Br⁻),
(ii) pH is within a range where the cupric ion does not precipitate,
(iii) the oxidation potential is at least 450 mV Pt vs. Ag/AgCl, typically at least 500 mV Pt vs. Ag/AgCl, more typically at least 550 mV Pt vs. Ag/AgCl.

The atmospheric halide leaching may be performed at a temperature of at least 50°C, preferably 88 to 100°C.

The atmospheric halide leaching is performed at a pH of less than 2.6, preferably less than 2.2.

The atmospheric halide leaching is performed at HCI concentration of less than 100 g/l, typically in less than 50 g/l.

The atmospheric halide leaching is performed in an acidity of the solution, which is between pH 2.6 and HCI acid concentration of 100 g/l. Typically the acidity of the solution is between pH 2.2 and HCI acid concentration of 50 g/l.

In the atmospheric halide leaching, an oxidizing source is provided into the halide leaching liquor. The oxidizing source may be an oxygen feed, an oxygen-enriched air feed, an air feed or a hydrogen peroxide feed to the solution. The purpose of the oxidizing source is to allow the copper in the solution to maintain in a 2⁺ ion form.

The concentrations of Cu²⁺, Cl⁻ and Br⁻ in the halide leaching liquor are typically in the range of 10 - 120 g/l Cu²⁺, 50 - 300 g/l Cl⁻ and 1 - 120 g/l Br⁻ . More typically the Br⁻ concentration in the halide leaching liquor is typically in the range of 35 - 80 g/l Br⁻. The presence of Br⁻ ions in the atmospheric leaching step results in the formation of complexes, which further enhances the recovery of PGM and gold and silver.

The method may further comprise feeding chlorine gas to the atmospheric halide leaching, optionally together with oxygen as the oxidation source to maintain the oxidation potential at a desired level.

The conditions of the atmospheric halide leaching enable that no separate sulphur oxidation step, such as roasting, is needed in the overall process. In the present method sulphur possibly present in the material to be leached in the atmospheric halide leaching does not oxidise in such extent that it causes big reagent costs. Sulphur can already be oxidised in the pressure oxidation leaching step depending on the raw material.

The method may further comprise a step d) of separating the second leach solution containing precious metals from the second solid residue by solid-liquid separation.

Furthermore, the method may further comprise recovering one or more precious metals from the second leach solution obtained in the atmospheric halide leaching step c). The recovery of precious metals is performed by conventional methods, such as precipitation, ion exchange and solvent extraction.

In an embodiment of the invention, the second leach solution depleted of precious metals (after the recovery of the precious metals) may be circulated to the atmospheric halide leaching step c).

When the starting material is a leach product from atmospheric acid leaching of a matte obtained from smelting of a nickel and/or copper bearing material, the second solid residue (the residue from the atmospheric halide leaching c) may be circulated to the smelting of the nickel and/or copper bearing material. Furthermore, the first leach solution (the liquid product from the pressure oxidative leaching) may be circulated to the atmospheric acid leaching. When the leach product introduced to pressure oxidative leaching is a solid leach residue from the atmospheric acid leaching, the corresponding liquid product from the atmospheric acid leaching may be introduced into the recovery of base metals.

Furthermore, the method may further comprise recovering one or more base metals from the first leach solution obtained in the pressure oxidative leaching step (a). The recovery of the base metals is performed by conventional methods.

In an embodiment of the invention, the first leach solution depleted of base metals (after the recovery of the base metals) may be circulated to the pressure oxidative leaching step a).

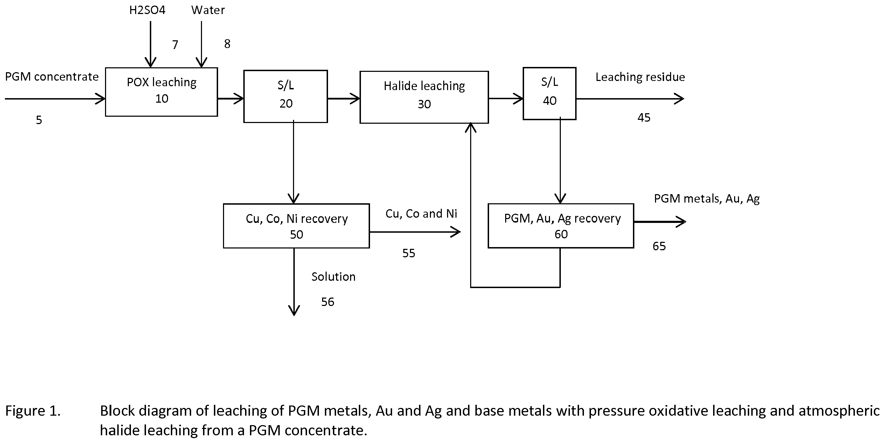

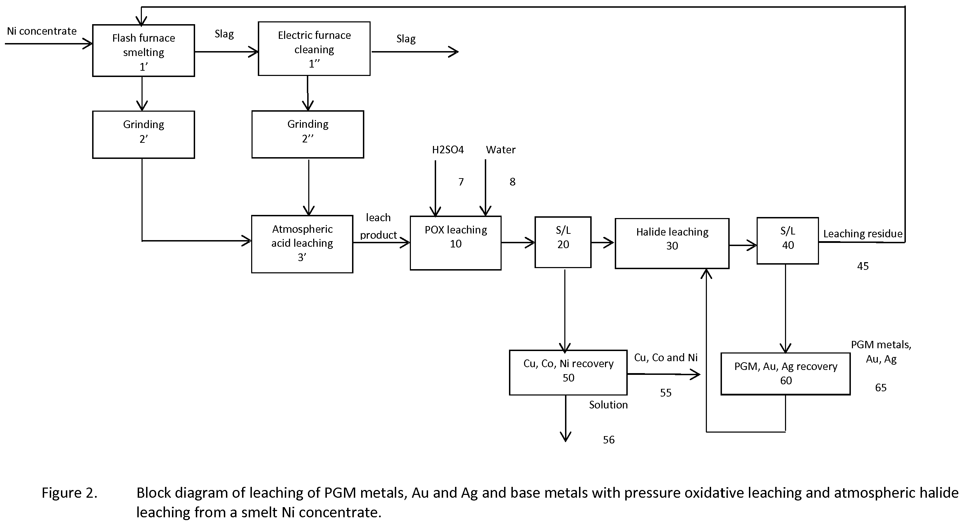

### Embodiments of Figures 1 and 2

In the following, the invention is illustrated by referring to Figure 1. Figure 1 is an exemplary embodiment of the invention, comprising the recovery of PGM metals, Au and Ag and also the recovery of base metals Cu, Co and Ni. In accordance with Figure 1, a PGM concentrate (5) is introduced into pressure oxidative leaching (POX leaching 10). The pressure oxidative leaching is performed in the presence of an acid solution (aqueous sulphuric acid) provided by a H₂SO₄ stream (7) and a water stream (8). The leach product from POX leaching (10) (comprising a leach solution containing base metals and a solid residue containing PGM metals, Au and Ag) is introduced into solid/liquid separation (S/L 20), where the leach solution and the solid residue are separated from each other.

The solid residue containing PGM metals, Au and Ag from solid/liquid separation (20) is introduced into halide leaching (30). The leach product from halide leaching (30) (comprising a solid residue and a second leach solution comprising PGM metals, Au and Ag) is introduced into solid/liquid separation (S/L 40). The solid leach residue is recovered as leaching residue (45). The leach solution containing PGM metals, Au and Ag from solid/liquid separation (40) is introduced into the recovery of the PGM metals, Au and Ag (PGM, Au, Ag recovery 60). A product containing PGM metals, Au and Ag is recovered (65). The solution obtained from the PGM, Au, Ag recovery and depleted of PGM metals, Au and Ag is circulated to the halide leaching (30).

The leach solution containing base metals (from solid/liquid separation 20) is introduced into a base metal recovery step (Cu, Co, Ni recovery 50), where Cu, Co and Ni (55) are separated and recovered from the remaining solution (56).

In the following, the invention is illustrated by referring to Figure 2. Figure 2 is an exemplary embodiment of the invention, comprising smelting, grinding and atmospheric acid leaching as pretreatment steps before the POX leaching and atmospheric halide leaching. In accordance with Figure 2, a nickel bearing material (nickel concentrate) is introduced into smelting in a flash furnace (1'). A matte and a slag are produced. The matte is introduced into grinding (2') and thereafter to atmospheric acid leaching (3'). The slag from the flash furnace smelting is subjected to cleaning in an electric furnace (1"). The matte thus obtained is introduced into grinding (2") and thereafter into the atmospheric acid leaching (3'). The leach product obtained from the atmospheric acid leaching is introduced into POX leaching (10), whereafter the method proceeds in the same way as in Figure 1. The leaching residue (45) obtained from the second solid/liquid separation (40) is circulated to smelting (1').

In an alternative embodiment of Figure 2 (not shown in Figure 2), the leach product from the atmospheric acid leaching may be subjected to solid/liquid separation, whereafter the solid leach residue is introduced into POX leaching (10), whereas the solution is introduced into the recovery of base metals (Cu, Co, Ni recovery 50). In a further alternative embodiment of Figure 2 (not shown in Figure 2), the liquid product from the first solid/liquid separation (20) may be circulated to the atmospheric acid leaching (3').

### Apparatus

The apparatus for separating precious metals from a starting material, comprises
a) a first leaching unit, which is adapted for forming a first solid residue containing precious metals and a first leach solution by pressure oxidative leaching, connected to
(b) a first separation unit, which is adapted for separating the first solid residue from the first leach solution by solid-liquid separation, and connected to
c) a second leaching unit, which is adapted for forming a second leach solution containing precious metals and a second solid residue from the first solid residue by atmospheric halide leaching.
In an embodiment the unit a) is connected directly to unit b) and unit b) is connected directly to unit c). According to an embodiment connecting the units directly after each other means that no other process units involving reactions effecting to the dissolution of the minerals are needed between units a), b) and c). Typical example of such process unit is for example roasting.

According to an embodiment the apparatus consists of units a), b) and c).

In an embodiment the first leaching unit is preceded by a smelting unit and an atmospheric leaching unit.

In a further embodiment the first leaching unit is further provided with means for realizing a hot cure phase.

In a still further embodiment the second leaching unit is followed by a second separation unit, which is adapted for separating the second leach solution containing precious metals from the second solid residue by solid-liquid separation.

In a still further embodiment the second separation unit is followed by a recovery unit adapted for recovering one or more precious metals from the second leach solution.

In a still further embodiment the recovery unit is provided with means adapted for circulating the solution depleted of precious metals to the second leaching unit.

In a still further embodiment the second separation unit is provided with means for circulating the second leach residue to the smelting unit.

In a still further embodiment the apparatus further comprises a further recovery unit adapted for recovering one or more base metals from the first leach solution.

In a still further embodiment the further recovery unit is provided with means for circulating the solution depleted of base metals to the first leaching unit.

The apparatus comprises in the atmospheric halide leaching unit a HCI concentration of less than 100 g/l, typically less than 50 g/l. The atmospheric halide leaching unit comprises acidity of the solution between pH 2.6 and HCI acid concentration of 100 g/l. Typically the acidity of the solution is between pH 2.2 and HCI acid concentration of 50 g/l.

### EXAMPLES

Leaching tests were carried out for two different PGM concentrates as the raw material: "PGM concentrate 1" (PGM 1, test 1) and "PGM concentrate 2" (PGM 2, test 2). Leaching was made in two stages. In the first leaching stage, base metals were dissolved using pressure oxidative leaching (POX leaching). In the second leaching stage, PGM metals, gold, and silver were dissolved using atmospheric halide leaching.

### 1. POX LEACHING TESTS

The pressure oxidation leaching (POX) tests for both raw materials were made in an autoclave with two initial acid concentrations. The conditions are presented in Table I.

**Table I POX leaching test conditions**

| | Test 1 | Test 2 |
|---|---|---|
| Concentrate | PGM 1 | PGM 2 |
| Acid conc. (H₂SO₄), g/l | 10 | 150 |
| Total volume, l | 2.7 | 2.7 |
| Temperature, °C | 210 | 210 |
| Oxygen overpressure, bar | 6 | 6 |
| Total pressure, bar | 26 | 26 |

The chemical compositions of the PGM concentrates 1 and 2 are shown in Table II.

**Table II Chemical compositions of the PGM concentrates 1 and 2**

| | Ag, ppm | Au, ppm | Co, % | Cu, % | Fe, % | Ni, % | Pd, ppm | Pt, ppm | Rh, ppm |
|---|---|---|---|---|---|---|---|---|---|
| PGM 1 | 36.0 | 1.8 | 0.09 | 6.8 | 31.5 | 2.0 | 18.9 | 26.0 | 0.7 |
| PGM 2 | 47.8 | 5.9 | 0.16 | 8.2 | 26.0 | 10.1 | 65.3 | 17.0 | - |

Table III shows the results from POX leaching tests. Almost all of the cobalt, copper, and nickel dissolved. The yields of the base metals were near 100% after both POX leaching tests. The yield of iron was about 25% in the first test because iron was precipitated as hematite in the autoclave (where the POX leaching was performed). In test 2, the yield of iron was about 98%.

Gold and silver did not dissolve in the POX leaching. Palladium and platinum did not essentially dissolve in the POX leaching. A minor part of rhodium dissolved in POX leaching.

**Table III Yields of metals after POX leaching (%)**

| | **PGM concentrate 1** | **PGM concentrate 2** |
|---|---|---|
| Ag | 0 | 0 |
| Au | 0 | 0 |
| Co | >98.3 | 94.0 |
| Cu | 99.5 | 99.8 |
| Fe | 25.7 | 98.7 |
| Ni | 96.1 | 99.9 |
| Pd | <0.2 | <0.1 |
| Pt | 5.7 | 41.7 |
| Rh | 16.9 | - |

### 2. ATMOSPHERIC HALIDE LEACHING TESTS

The halide leaching tests of the POX leaching residues obtained above were made in atmospheric conditions at 98°C. The conditions are presented in Table IV.

**Table IV Conditions in halide leaching tests**

| | **Test 1** | **Test 2** |
|---|---|---|
| **Concentrate** | PGM 1 | PGM 2 |
| **Concentration of Cu, g/l** | 100 | 100 |
| **Concentration of Br⁻, g/l** | 80 | 80 |
| **Concentration of Cl⁻, g/l** | 225 | 225 |
| **Temperature, °C** | 98 | 98 |
| **pH, -** | 1.7 | 1.7 |
| **Redox, mV** | ≥450 | ≥450 |

In the first test, the raw material was a hematite-containing residue from the first POX leaching test. In the second test, the raw material was a residue with a low iron concentration from the second POX leaching test. The compositions of the raw materials are shown in Table V.

**Table V Chemical compositions of POX leaching residues**

| | **Ag, ppm** | **Au, ppm** | **Fe, %** | **Pd, ppm** | **Pt, ppm** | **Rh, ppm** |
|---|---|---|---|---|---|---|
| **PGM concentrate 1** | 466.2 | 28.0 | 44.8 | 35.4 | 46.0 | 1.1 |
| **PGM concentrate 2** | 1025.1 | 56.5 | 1.1 | 157.8 | 31.1 | - |

The results of the halide leaching tests are shown in Table VI.

The yields of palladium, gold, and silver were the same in the second test as in the first test. The yield of platinum was about 87% and 67%, respectively. The yield of rhodium was about 95%.

**Table VI Yields of PGM metals, gold and silver after halide leaching (%)**

| | PGM concentrate 1 | **PGM concentrate 2** |
|---|---|---|
| **Ag** | 99.8 | 99.96 |
| **Au** | 99.7 | 99.58 |
| **Pd** | 98.9 | 95.52 |
| **Pt** | 87.0 | 66.96 |
| **Rh** | 95.3 | - |

The invention and its embodiments are not limited to the examples described above but may vary within the scope of the claims.

## Claims

1. A method for separating precious metals from a starting material, which method comprises the steps of
a) subjecting the starting material to pressure oxidative leaching forming a first solid residue containing precious metals and a first leach solution,
b) separating the first solid residue containing precious metals from the first leach solution by solid-liquid separation, and
c) subjecting the first solid residue containing precious metals to atmospheric halide leaching, wherein the precious metals are leached into solution forming a second leach solution containing precious metals and a second solid residue and wherein the atmospheric halide leaching is performed in an acidity of the solution between pH of less than 2.6 and HCI concentration of less than 100 g/l and in the following conditions:
(i) the leaching liquor is an aqueous solution containing dissolved cupric ions (Cu²⁺), chloride (Cl⁻) and bromide (Br⁻),
(ii) pH is within a range where the cupric ion does not precipitate,
(iii) the oxidation potential is at least 450 mV Pt vs. Ag/AgCl, typically at least 500 mV Pt vs. Ag/AgCl, more typically at least 550 mV Pt vs. Ag/AgCl.

2. The method according to claim 1, wherein the precious metals comprise platinum group metals (PGM metals).

3. The method according to claim 1, wherein the precious metals comprise PGM metals.

4. The method according to claim 2 or 3, wherein the PGM metals comprise one or more of Pt, Pd and Rh.

5. The method according to claim 1, wherein the starting material is a concentrate containing precious metals, especially PGM metals and Au and Ag.

6. The method according to claim 1, wherein the starting material is a concentrate containing PGM metals.

7. The method according to any one of claims 1 to 6, wherein the starting material is selected from nickel-copper concentrates, PGM concentrates, copper concentrates and nickel concentrates.

8. The method according to claim 1, wherein the starting material is a product obtained from smelting of a nickel and/or copper bearing material.

9. The method according to any one of the preceding claims, wherein the pressure oxidative leaching a) is performed in the presence of acid concentration of up to 100 g/l.

10. The method according to any one of the preceding claims, wherein the pressure oxidative leaching a) is performed at a temperature of 120 - 240°C.

11. The method according to any one of the preceding claims, wherein the pressure oxidative leaching a) is performed at a pressure of 8 - 30 bar.

12. The method according to any one of the preceding claims, wherein the pressure oxidative leaching step (a) further comprises a hot cure phase, wherein the temperature is decreased to a range of 85 to 95°C, preferably approximately 90°C.

13. The method according any one of the preceding claims, wherein the atmospheric halide leaching c) is performed at a temperature of at least 50°C, preferably 88 to 100°C.

14. The method according to any one of the preceding claims, wherein the atmospheric halide leaching is performed at a pH of less than 2.2.

15. The method according to any one of the preceding claims, wherein the atmospheric halide leaching is performed at HCI concentration of less than 50 g/l, typically the atmospheric halide leaching is performed in an acidity of the solution between pH 2.6 and HCI acid concentration of 100 g/l, more typically between pH 2.2 and HCI acid concentration of 50 g/l.

16. The method according to any one of the preceding claims, wherein the atmospheric halide leaching c) is performed by providing an oxidizing source.

17. The method according to claim 16, wherein the oxidizing source is an oxygen feed, an oxygen-enriched air feed, an air feed or a hydrogen peroxide feed to the solution.

18. The method according to any one of the preceding claims, wherein the method further comprises feeding chlorine gas to atmospheric halide leaching, optionally together with oxygen.

19. The method according to any one of the preceding claims, wherein the concentrations of Cu²⁺, Cl⁻ and Br in the atmospheric halide leaching liquor is 10 - 120 g/l Cu²⁺, 50 - 300 g/l Cl⁻ and 1 - 120 g/l Br⁻.

20. The method according to any one of the preceding claims, wherein the concentration of Br⁻ in the atmospheric halide leaching liquor i 35 - 80 g/l Br⁻.

21. The method according to any one of the preceding claims, wherein the method comprises a further step d) of separating the second leach solution containing precious metals from the second solid residue by solid-liquid separation.

22. The method according to claim 21, wherein the method further comprises recovering one or more precious metals from the second leach solution.

23. The method according to claim 22, wherein the second leach solution depleted of precious metals is circulated to the atmospheric halide leaching step c).

24. The method according to claims 8 and 21, wherein the second solid residue is circulated to the smelting of the nickel and/or cobalt bearing material.

25. The method according to any one of the preceding claims, wherein the first leach solution obtained in step a) is a solution containing base metals.

26. The method according to claim 25, wherein the method further comprises recovering one or more base metals from the first leach solution.

27. The method according to claim 26, wherein the first leach solution depleted of base metals is circulated to the pressure oxidative leaching step a).

28. The method according to any one of claims 25 to 27, wherein the base metals comprise one or more of Cu, Co and Ni.

29. The method according to any one of the preceding claims, wherein step b) is performed directly after step a) and step c) is performed directly after step b).

## Patentansprüche

1. Verfahren für die Trennung von Edelmetallen von einem Ausgangsmaterial, welches Verfahren die Schritte umfasst des
a) Unterwerfens des Ausgangsmaterials einer oxidativen Druckauslaugung unter Bildung eines ersten festen Rückstands, der Edelmetalle enthält, und einer ersten Auslaugungslösung,
b) Trennens des ersten festen Rückstands, der Edelmetalle enthält, von der ersten Auslaugungslösung durch Feststoff-Flüssigkeitstrennung und
c) Unterwerfens des ersten festen Rückstands, der Edelmetalle enthält, einer atmosphärischen Halogenidauslaugung , wobei die Edelmetalle in eine Lösung gelaugt werden, die eine zweite Auslaugungslösung bildet, die Edelmetalle und einen zweiten festen Rückstand enthält, und wobei die atmosphärische Halogenidauslaugung bei einer Azidität der Lösung zwischen einem pH-Wert von weniger als 2,6 und einer HCl-Konzentration von weniger als 100 g/l und unter den folgenden Bedingungen ausgeführt wird:
(i) die Auslaugungslauge ist eine wässrige Lösung, die gelöste Kupferionen (Cu²⁺), Chlorid (Cl⁻) und Bromid (Br⁻) enthält,
(ii) der pH-Wert liegt innerhalb eines Bereichs, in dem das Kupferion nicht ausfällt,
(iii) das Oxidationspotential beträgt mindestens 450 mV Pt gegen Ag/AgCl, typischerweise mindestens 500 mV Pt gegen Ag/AgCl, noch typischer mindestens 550 mV Pt gegen Ag/AgCl.

2. Verfahren nach Anspruch 1, wobei die Edelmetalle Metalle der Platingruppe (PGM-Metalle) umfassen.

3. Verfahren nach Anspruch 1, wobei die Edelmetalle PGM-Metalle umfassen.

4. Verfahren nach Anspruch 2 oder 3, wobei die PGM-Metalle eines oder mehrere von Pt, Pd und Rh umfassen.

5. Verfahren nach Anspruch 1, wobei das Ausgangsmaterial ein Konzentrat ist, das Edelmetalle, insbesondere PGM-Metalle und Au und Ag, enthält.

6. Verfahren nach Anspruch 1, wobei das Ausgangsmaterial ein Konzentrat ist, das PGM-Metalle enthält.

7. Verfahren nach einem der Ansprüche 1 bis 6, wobei das Ausgangsmaterial unter Nickel-Kupferkonzentraten, PGM-Konzentraten, Kupferkonzentraten und Nickelkonzentraten ausgewählt wird.

8. Verfahren nach Anspruch 1, wobei das Ausgangsmaterial ein Produkt ist, das aus dem Schmelzen eines nickel- und/oder kupfertragenden Materials erhalten wird.

9. Verfahren nach einem der vorstehenden Ansprüche, wobei die oxidative Druckauslaugung a) in Gegenwart einer Säurekonzentration von bis zu 100 g/l ausgeführt wird.

10. Verfahren nach einem der vorstehenden Ansprüche, wobei die oxidative Druckauslaugung a) bei einer Temperatur von 120 - 240 °C ausgeführt wird.

11. Verfahren nach einem der vorstehenden Ansprüche, wobei die oxidative Druckauslaugung a) bei einem Druck von 8-30 bar ausgeführt wird.

12. Verfahren nach einem der vorstehenden Ansprüche, wobei der oxidative Druckauslaugungsschritt (a) weiter eine Heißhärtungsphase umfasst, wobei die Temperatur auf einen Bereich von 85 bis 95 °C, bevorzugt etwa 90 °C, reduziert wird.

13. Verfahren nach einem der vorstehenden Ansprüche, wobei die atmosphärische Halogenidauslaugung c) bei einer Temperatur von mindestens 50 °C, bevorzugt 88 bis 100 °C ausgeführt wird.

14. Verfahren nach einem der vorstehenden Ansprüche, wobei die atmosphärische Halogenidauslaugung bei einem pH-Wert von weniger als 2,2 ausgeführt wird.

15. Verfahren nach einem der vorstehenden Ansprüche, wobei die atmosphärische Halogenidauslaugung bei einer HCI-Konzentration von weniger als 50 g/l ausgeführt wird, die atmosphärische Halogenidauslaugung typischerweise bei einer Azidität der Lösung zwischen einem pH-Wert von 2,6 und einer HCl-Säurekonzentration von 100 g/l, noch typischer zwischen einem pH-Wert von 2,2 und einer HCl-Säurekonzentration von 50 g/l ausgeführt wird.

16. Verfahren nach einem der vorstehenden Ansprüche, wobei die atmosphärische Halogenidauslaugung c) durch Bereitstellen einer Oxidationsquelle ausgeführt wird.

17. Verfahren nach Anspruch 16, wobei die Oxidationsquelle eine Sauerstoffeinspeisung, eine mit Sauerstoff angereicherte Lufteinspeisung, eine Lufteinspeisung oder eine Wasserstoffperoxideinspeisung in die Lösung ist.

18. Verfahren nach einem der vorstehenden Ansprüche, wobei das Verfahren weiter das Einführen von Chlorgas zur atmosphärischen Halogenidauslaugung, wahlweise zusammen mit Sauerstoff, umfasst.

19. Verfahren nach einem der vorstehenden Ansprüche, wobei die Konzentrationen von Cu²⁺, Cl⁻ und Br⁻ in der Lauge der atmosphärischen Halogenidauslaugung 10 - 120 g/l Cu²⁺, 50 - 300 g/l Cl⁻ und 1 - 120 g/l Br betragen.

20. Verfahren nach einem der vorstehenden Ansprüche, wobei die Konzentration von Br⁻ in der Lauge der atmosphärischen Halogenidauslaugung 35-80 g/l Br⁻ beträgt.

21. Verfahren nach einem der vorstehenden Ansprüche, wobei das Verfahren einen weiteren Schritt d) des Trennens der zweiten Auslaugungslösung, die Edelmetalle enthält, von dem zweiten festen Rückstand durch Feststoff-Flüssigkeitstrennung umfasst.

22. Verfahren nach Anspruch 21, wobei das Verfahren weiter das Gewinnen eines oder mehrerer Edelmetalle aus der zweiten Auslaugungslösung umfasst.

23. Verfahren nach Anspruch 22, wobei die zweite Auslaugungslösung, die an Edelmetallen verarmt ist, zum atmosphärischen Halogenidauslaugungsschritt c) zirkuliert wird.

24. Verfahren nach den Ansprüchen 8 und 21, wobei der zweite feste Rückstand zum Schmelzen des nickel- und/oder kobalttragenden Materials zirkuliert wird.

25. Verfahren nach irgendeinem der vorhergehenden Ansprüche, wobei die erste Auslaugungslösung, die in Schritt a) erhalten wird, eine Lösung ist, die unedle Metalle enthält.

26. Verfahren nach Anspruch 25, wobei das Verfahren weiter das Gewinnen eines oder mehrerer unedler Metalle aus der ersten Auslaugungslösung umfasst.

27. Verfahren nach Anspruch 26, wobei die erste Auslaugungslösung, die an unedlen Metallen verarmt ist, zu dem oxidativen Druckauslaugungsschritt a) zirkuliert wird.

28. Verfahren nach irgendeinem der Ansprüche 25 bis 27, wobei die unedlen Metalle eines oder mehrere von Cu, Co und Ni umfassen.

29. Verfahren nach einem der vorstehenden Ansprüche, wobei der Schritt b) direkt nach Schritt a) ausgeführt wird und der Schritt c) direkt nach Schritt b) ausgeführt wird.

## Revendications

1. Procédé de séparation de métaux précieux d'une matière de départ, procédé qui comprend les étapes de
a) soumission de la matière de départ à une lixiviation oxydante sous pression formant un premier résidu solide contenant des métaux précieux et une première solution de lixiviation,
b) séparation du premier résidu solide contenant des métaux précieux de la première solution de lixiviation par une séparation solide-liquide, et
c) soumission du premier résidu solide contenant des métaux précieux à une lixiviation atmosphérique à l'halogénure, dans lequel les métaux précieux sont lixiviés dans une solution formant une seconde solution de lixiviation contenant des métaux précieux et un second résidu solide et dans lequel la lixiviation atmosphérique à l'halogénure est réalisée à une acidité de la solution comprise entre un pH inférieur à 2,5 et une concentration de HCl inférieure à 100 g/l et dans les conditions suivantes :
(i) la liqueur de lixiviation est une solution aqueuse contenant des ions cuivriques (Cu²⁺), chlorure (Cl⁻) et bromure (Br⁻) dissous,
(ii) le pH est dans une plage où l'ion cuivrique ne précipite pas,
(iii) le potentiel d'oxydation est d'au moins 450 mV Pt par rapport à Ag/AgCl, typiquement d'au moins 500 mV Pt par rapport à Ag/AgCl, plus typiquement d'au moins 550 mV Pt par rapport à Ag/AgCl.

2. Procédé selon la revendication 1, dans lequel les métaux précieux comprennent des métaux du groupe du platine (métaux MGP).

3. Procédé selon la revendication 1, dans lequel les métaux précieux comprennent des métaux MGP.

4. Procédé selon la revendication 2 ou 3, dans lequel les métaux MGP comprennent un ou plusieurs parmi Pt, Pd et Rh.

5. Procédé selon la revendication 1, dans lequel la matière de départ est un concentré contenant des métaux précieux, en particulier des métaux MGP et Au et Ag.

6. Procédé selon la revendication 1, dans lequel la matière de départ est un concentré contenant des métaux MGP.

7. Procédé selon l'une quelconque des revendications 1 à 6, dans lequel la matière de départ est choisie parmi des concentrés de nickel-cuivre, des concentrés de MGP, des concentrés de cuivre et des concentrés de nickel.

8. Procédé selon la revendication 1, dans lequel la matière de départ est un produit obtenu par fusion d'un matériau portant du nickel et/ou du cuivre.

9. Procédé selon l'une quelconque des revendications précédentes, dans lequel la lixiviation oxydante sous pression a) est réalisée en présence d'une concentration d'acide allant jusqu'à 100 g/l.

10. Procédé selon l'une quelconque des revendications précédentes, dans lequel la lixiviation oxydante sous pression a) est réalisée à une température de 120 à 240 °C.

11. Procédé selon l'une quelconque des revendications précédentes, dans lequel la lixiviation oxydante sous pression a) est réalisée sous une pression de 8 à 30 bars.

12. Procédé selon l'une quelconque des revendications précédentes, dans lequel la lixiviation oxydante sous pression (a) comprend en outre une phase de durcissement à chaud, dans lequel la température est abaissée dans une plage de 85 à 95 °C, de préférence à environ 90 °C.

13. Procédé selon l'une quelconque des revendications précédentes, dans lequel la lixiviation atmosphérique à l'halogénure c) est réalisée à une température d'au moins 50 °C, de préférence de 88 à 100 °C.

14. Procédé selon l'une quelconque des revendications précédentes, dans lequel la lixiviation atmosphérique à l'halogénure est réalisée à un pH inférieur à 2,2.

15. Procédé selon l'une quelconque des revendications précédentes, dans lequel la lixiviation atmosphérique à l'halogénure est réalisée à une concentration de HCl inférieure à 50 g/l, typiquement la lixiviation atmosphérique à l'halogénure est réalisée à une acidité de la solution comprise entre un pH de 2,6 et une concentration d'acide HCl de 100 g/l, plus typiquement entre un pH de 2,2 et une concentration d'acide HCl de 50 g/l.

16. Procédé selon l'une quelconque des revendications précédentes, dans lequel la lixiviation atmosphérique à l'halogénure c) est réalisée en fournissant une source oxydante.

17. Procédé selon la revendication 16, dans lequel la source oxydante est une alimentation en oxygène, une alimentation en air enrichi en oxygène, une alimentation en air ou une alimentation en peroxyde d'hydrogène de la solution.

18. Procédé selon l'une quelconque des revendications précédentes, dans lequel le procédé comprend en outre l'alimentation en chlore gazeux de la lixiviation atmosphérique, éventuellement conjointement à de l'oxygène.

19. Procédé selon l'une quelconque des revendications précédentes, dans lequel la concentration de Cu²⁺, de Cl⁻ et de Br⁻ dans la liqueur de lixiviation atmosphérique à l'halogénure est de 10 à 120 g/l de Cu²⁺, de 50 à 300 g/l de Cl⁻ et de 1 à 120 g/l de Br⁻.

20. Procédé selon l'une quelconque des revendications précédentes, dans lequel la concentration de Br⁻ dans la liqueur de lixiviation atmosphérique à l'halogénure est de 35 à 80 g/l de Br⁻.

21. Procédé selon l'une quelconque des revendications précédentes, dans lequel le procédé comprend une étape supplémentaire d) de séparation de la seconde solution de lixiviation contenant des métaux précieux du second résidu solide par une séparation solide-liquide.

22. Procédé selon la revendication 21, dans lequel le procédé comprend en outre la récupération d'un ou de plusieurs métaux précieux de la seconde solution de lixiviation.

23. Procédé selon la revendication 22, dans lequel la seconde solution de lixiviation appauvrie en métaux précieux est recyclée dans l'étape de lixiviation atmosphérique à l'halogénure c).

24. Procédé selon les revendications 8 et 21, dans lequel le second résidu solide est recyclé dans la masse en fusion du matériau portant du nickel et/ou du cobalt.

25. Procédé selon l'une quelconque des revendications précédentes, dans lequel la première solution de lixiviation obtenue dans l'étape a) est une solution contenant des métaux de base.

26. Procédé selon la revendication 25, dans lequel le procédé comprend en outre la récupération d'un ou de plusieurs métaux de base de la première solution de lixiviation.

27. Procédé selon la revendication 26, dans lequel la première solution de lixiviation appauvrie en métaux de base est recyclée dans l'étape de lixiviation oxydante sous pression a).

28. Procédé selon l'une quelconque des revendications 25 à 27, dans lequel les métaux de base comprennent un ou plusieurs parmi Cu, Co et Ni.

29. Procédé selon l'une quelconque des revendications précédentes, dans lequel l'étape b) est réalisée directement après l'étape a) et l'étape c) est réalisée directement après l'étape b).
